# EUROPEAN PATENT APPLICATION

(11) **EP 2 053 020 A1**
(43) Date of publication of application: **29.04.2009**
(21) Application number: 07118958.3
(22) Date of filing: 22.10.2007
(51) Int. Cl.: C01B 33/44, C08K 9/04

(54) **A method for preparing an inorganic crystalline ceramic material having an organized structure.**

(71) Applicant: Nederlandse Organisatie voor Toegepast- Natuurwetenschappelijk Onderzoek TNO, 2628 VK The Hague (NL)
(72) Inventor: Batenburg, Lawrence Fabian, 5652 EJ Eindhoven (NL); Timmer, Klaas, 3721 XJ Bilthoven (NL)
(74) Representative: Hatzmann, Martin

(57) **Abstract**

The present invention provides a method for preparing an inorganic crystalline ceramic material having an organized structure, comprising the steps of:
(a) providing nanoparticles of one or more inorganic crystalline ceramic materials;
(b) reacting metal hydroxide groups that are present on the nanoparticles with molecules of a chemical compound which molecules each comprisea first and a second reactive moiety, whereby a covalent bond is formed between the first reactive moieties of the molecules and the respective metal hydroxide groups; and
(c) subjecting the nanoparticles obtained in step (b) to a treatment which enables the formation of a bond between at least two nanoparticles, whereby the bond is formed directly or indirectly between the second reactive moieties of the covalenty bonded molecules of the chemical compound as obtained in step (b), thereby forming an organized structure.

## Description

The present invention relates to a method for preparing an inorganic crystalline ceramic material having an organized structure.

Object of the present invention is to provide a coating of an inorganic ceramic material having excellent barrier and/or antifouling properties.

Surprisingly, it has been found that this can be established when nanoparticles of an inorganic ceramic material are modified using a chemical compound having reactive moieties.

Accordingly, the present invention relates to a method for preparing an inorganic crystalline ceramic material having an organized structure, comprising the steps of:
(a) providing nanoparticles of one or more inorganic crystalline ceramic materials;
(b) reacting metal hydroxide groups that are present on the nanoparticles with molecules of a chemical compound which molecules each comprise a first and a second reactive moiety, whereby a covalent bond is formed between the first reactive moieties of the molecules and the respective metal hydroxide groups; and
(c) subjecting the nanoparticles obtained in step (b) to a treatment which enables the formation of a bond between at least two nanoparticles, whereby said bond is formed directly or indirectly between the second reactive moieties of the covalently bonded molecules of the chemical compound as obtained in step (b), thereby forming an organized structure.

In this way, the nanoparticles of the inorganic ceramic material can advantageously be coupled thereby creating an organized structure which displays excellent barrier and/or antifouling activities.

The molecules of the chemical compound to be used in accordance with the present invention comprise at least a first and a second reactive moiety. Such molecules may, however, each comprise one or more additional reactive moieties.

The first reactive moieties of the molecules of the chemical compound can suitably be selected from the group consisting of halogens (Cl, Br, I) alcohols or alkoxides (OR) (R= H, Na, K, Li) esters or activated esters (O-C=OR), cyanates, isocyanates (NCO), isothiocyanates (NCS), acid chlorides (C(=O)Cl), epoxies, amines (NRR'), carboxylic acids and carboxylates (COOX (X=Na, H,Li, K)), aldehydes, ketones (C(=O)C), thiols (SH), sulfides (SS) anhydrides and polysulfides (SSSS).

Preferably, the first reactive moiety of the chemical compound is selected from the group consisting of epoxy, amines, and (iso)cyanates.

More preferably, the first reactive moieties of the molecules of the chemical compound comprise an epoxy or an isocyanate.

The second reactive moieties of the molecules of the chemical compound can suitably be selected from the group consisting of halogens (Cl, Br, I) alcohols or alkoxides (OR) (R= H, Na, K, Li) esters or activated esters (O-C=OR), cyanates, isocyanates (NCO), isothiocyanates (NCS), acid chlorides (C(=O)Cl), alkenes, epoxies, amines (NRR'), carboxylic acids and carboxylates (COOX (X=Na, H,Li, K)), aldehydes, ketones (C(=O)C), thiols (SH), sulfides (SS) anhydrides and polysulfides (SSSS).

Preferably, the second reactive moieties of the molecules of the chemical compound are selected from the group consisting of amines and(iso)cyanates.

More preferably, the second reactive moieties of the molecules of the chemical compound comprise an epoxy or an isocyanate.

In accordance with the present invention, the first reactive moieties of the molecules of the chemical compound and second reactive moieties of the molecule of the chemical compound may either be the same or they may differ from each other.

Preferably, the first reactive moieties of the molecules of the chemical compound and second reactive moieties of the molecules of the chemical compound differ from each other.

In a particular embodiment of the present invention, the present method comprises the steps of:
(a) providing nanoparticles of at least a first and a second inorganic crystalline ceramic material;
(b)(i) reacting metal hydroxide groups that are present on the nanoparticles of the first inorganic crystalline ceramic material with molecules of a first chemical compound which molecules each comprise a first and a second reactive moiety, whereby a covalent bond is formed between the first reactive moieties of the molecules of the first chemical compound and the respective metal hydroxide groups that are present on the nanoparticles of the first inorganic crystalline ceramic material;
(b)(ii) reacting metal hydroxide groups that are present on the nanoparticles of the second inorganic crystalline ceramic material with molecules of a second chemical compound which molecules each comprise a first and a second reactive moiety, whereby a covalent bond is formed between the first reactive moieties of the molecules of the second chemical compound and the respective metal hydroxide groups that are present on the nanoparticles of the second inorganic crystalline ceramic material; and
(c) contacting the nanoparticles of the first and the second inorganic crystalline ceramic material as obtained in respectively step (b)(i) and (b)(ii) to form a bond between nanoparticles of respectively the first and the second inorganic crystalline ceramic material, whereby the bond is directly or indirectly formed between the second reactive moieties of the molecules of the first chemical compound and the second reactive moieties of the molecules of the second chemical compound, thereby forming an organized structure.

In this way, a bond can be directly or indirectly formed between nanoparticles of a first inorganic ceramic material and nanoparticles of a second inorganic ceramic material.

The molecules of the first and second chemical compound to be used in accordance with the present invention comprise at least a first and a second reactive moiety. Such molecules may, however, each comprise one or more additional reactive moieties.

In step (c), the nanoparticles obtained in step (b) are subjected to a treatment which enables the formation of a direct or indirect bond. Such a chelate or direct bond can be a covalent bond, whereas such an indirect bond can be an ionic bond or metal bridge complexation bond. Suitable treatments to enable the formation of such a direct bond include, for instance, mechano-chemical activation and water absorption. Suitable treatments to enable the formation of such an indirect bond include, for instance, treatment to increase or decrease pH, bead milling and metal salts.

The first reactive moieties of the molecules of the first chemical compound and the first reactive moieties of the molecules of the second chemical compound can suitably be selected from the group consisting of halogens (Cl, Br, I) alcohols or alkoxides (OR) (R= H, Na, K, Li) esters or activated esters (O-C=OR), cyanates, isocyanates (NCO), isothiocyanates (NCS), acid chlorides (C(=O)Cl), epoxies, amines (NRR'), carboxylic acids and carboxylates (COOX (X=Na, H,Li, K)), aldehydes, ketones (C(=O)C), thiols (SH), sulfides (SS) and polysulfides (SSSS).

Preferably, the first reactive moieties of the molecules of the first chemical compound and the first reactive moieties of the molecules of the second chemical compound are selected from the group consisting of amines, epoxies and (iso)cyanates. More preferably, the first reactive moieties of the molecules of the first chemical compound and the first reactive moieties of the molecules of the second chemical compound comprise an epoxy or an isocyanate.

In accordance with the present invention, the first reactive moieties of the molecules of the first chemical compound and the second reactive moieties of the molecules of the first chemical compound may either be the same or they may differ from each other.

Preferably, the first reactive moieties of the molecules of the first chemical compound and the second reactive moieties of the molecules of the first chemical compound differ from each other.

In accordance with the present invention, the first reactive moieties of of the molecules of the second chemical compound and the second reactive moieties of the molecules of the second chemical compound may either be the same or they may differ from each other.

Preferably, the first reactive moieties of the molecules of the second chemical compound and the second reactive moieties of the molecules of the second chemical compound differ from each other.

The second reactive moieties of the molecules of the first chemical compound and the second reactive moieties of the molecules of the second chemical compound can suitably be selected from the group consisting of halogens (Cl, Br, I) alcohols or alkoxides (OR) (R= H, Na, K, Li) esters or activated esters (O-C=OR), cyanates, isocyanates (NCO), isothiocyanates (NCS), acid chlorides (C(=O)Cl), epoxies, amines (NRR'), carboxylic acids and carboxylates (COOX (X=Na, H,Li, K)), aldehydes, ketones (C(=O)C), thiols (SH), sulfides (SS) and polysulfides (SSSS).

Preferably, the second reactive moieties of the molecules of the first chemical compound and the second reactive moieties of the molecules of the second chemical compound are selected from the group consisting of alcohols, amines, epoxies and (iso)cyanates.

More preferably, the second reactive moieties of the molecules of the first chemical compound and the second reactive moieties of the molecules of the second chemical compound comprise an amine or an alcohol.

In accordance with the present invention, the first reactive moieties of the molecules of the first chemical compound and the first reactive moieties of the molecules of the second chemical compound may be the same or they may differ from each other. Preferably, the first reactive moieties of the molecules of the first chemical compound and the first reactive moieties of the molecules of the second chemical compound are different.

In accordance with the present invention, the second reactive moieties of the molecules of the first chemical compound and the second reactive moieties of the molecules of the second chemical compound may be the same or they may differ from each other. Preferably, the second reactive moieties of the molecules of the first chemical compound and the second reactive moieties of the second chemical compound are different.

The nanoparticles of the one or more inorganic crystalline ceramic materials in accordance with the present invention suitably have an aspect ratio in the range of from 4 to 1000.

Preferably, the nanoparticles of the one or more inorganic crystalline ceramic materials have an aspect ratio in the range of from 50 to 1000.

Suitably, the nanoparticles to be used in accordance with the present invention have an average particle size in the range of from 20nm to 800nm preferably in the range of from 50 nm-500 nm. In accordance with the present invention, the one or more inorganic crystalline ceramic materials comprise a clay having a layered structure and an exchange capacity of from 5 to 250 milliequivalents per 100 gram.

Suitably, such a clay can be selected from the group consisting of a sepiolite, attapulgite, palygorskite, montmorillonite, saponite, hectoraite, fluorohectorite, beidellite, nontronite, vermiculite, halloysite and stevensite.

Preferably, such a clay comprises montmorillonite or hectorite.

Suitably, the metal hydroxide groups of the one or more inorganic ceramic materials comprise Si-OH and/or Al-OH and/or Mg-OH groups.

In a particular embodiment of the present invention, the bond between the second reactive moieties of the molecules of the first or second chemical compound that are present on the respective nanoparticles is formed indirectly by means of molecules of a third chemical compound which molecules each comprise a first and a second reactive moiety, whereby the first and second reactive moieties of the molecules of the third chemical compound form direct bonds with the second reactive moieties of the molecules of the first chemical compound that are covalently bonded to metal hydroxide groups present on the respective nanoparticles and the second moieties of the molecules of the second chemical compound that are covalently bonded to metal hydroxide groups present on the respective nanoparticles.

In such an embodiment the first and second reactive moieties of the molecules of the third chemical compound may be different or the same. Preferably, the first and second reactive moieties of the molecules of the third chemical compound are different. The molecules of the third chemical compound may comprise any of the reactive moieties which have been described hereinbefore. In addition to the first and second moieties the molecules of the third chemical compound may comprise one or more other reactive moieties.

The present invention also relates to a nanocomposite material comprising one or more inorganic crystalline ceramic materials having an organized structure as prepared with the present method, a polymeric matrix and a block copolymer or a graft copolymer.

The inorganic ceramic material having an organized structure as prepared in accordance with the present invention can attractively be used in barrier coatings, antifouling paints or fouling-release paints. Other suitable applications include mechanically improved surface properties, surface finishes, improved barrier properties, formation of a network and percolation.

In addition, the present invention provides a shaped article which comprises an inorganic crystalline ceramic material having an organized structure prepared in accordance with the present invention or a nanocomposite material according to the present invention.

Suitably, the shaped article according to the present invention comprises a coating, which coating comprises an inorganic crystalline ceramic material having an organized structure prepared in accordance with the present invention or the nanocomposite material in accordance with the present invention.

### Examples

### Example 1: A sodium montmorillonite reaction with 3-(glycidoxypropyl)trimethoxysilane ((MeO)₃--Si(CH₂)₃OCH₂CH(cy-O)CH₂)

### Metal hydroxides of the clay edges were reacted with an epoxy-silane using the following procedure:

16.6 g of montmorillonite (clay) were dried at 100°C in a circulation-oven for 16 hours. The remaining clay (14.62 g) was quickly placed under a nitrogen atmosphere. Next to that, 250 ml of toluene were added, followed by 10.64 g (45 mmol) of (MeO)₃Si(CH₂)₃OCH₂CH(cy-O)CH₂ and 1 ml of triethylamine (Et₃N). This mixture was stirred at room temperature for 1 hour. While stirring, the temperature was risen to 90°C. Stirring was continued for 2 hours, after which time another 5.32 g (22.5 mmol) of (MeO)₃Si(CH₂)₃OCH₂CH(cy-O)CH₂ was added. Stirring at 90°C was then continued for 18 hours. After cooling to room temperature, the product was isolated by filtration and washed with 100 ml of toluene (6 times). Finally, the product was dried in vacuum (1 mm Hg) at 40°C for 16 hours. Yield: 15.3 g of a beige-brown solid. XRD: very broad first reflection at ca. 7.66 °2θ with d-spacing 11.5Å. TGA/DTA: volatiles (<200°C) 1.9% and the residue at 800°C was 87.42%.

### Example 2: A sodium montmorillonite reaction with (aminopropyl)triethoxysilane ((EtO)₃-Si(CH₂)₃NH₂)

### Metal hydroxides of the clay edges were reacted with an amino-silane using the following procedure:

This product was prepared as described above in Example 1, now, however, with 9.96 g (45 mmol) and 4.98 g (22.5 mmol) of (EtO)₃Si(CH₂)₃NH₂, respectively. Yield: 15.35 g of a beige-brown solid. XRD: very broad first reflection at ca. 8.12 °2θ with d-spacing 10.9Å. TGA/DTA: volatiles (<200°C) 2.8% and the residue at 800°C was 89.05%.

### Example 3: An organically modified synthetic hectorite reaction with 3-(glycidoxypropyl)dimethylethoxysilane (EtOSi(Me)₂(CH₂)₃OOH₂CH(cy-O)CH₂)

### Metal hydroxides of the clay edges were reacted with an epoxy-silane using the following procedure:

5 g of organically modified Hectorite with Cetyltributylphosphonium (CeBu₃P) were dispersed in 75 ml of toluene under nitrogen atmosphere. Then 6.55 g (30 mmol) of EtOSi(Me)₂(CH₂)₃OCH₂CH(cy-O)CH₂ and 1 ml of Et₃N were added while stirring. Stirring was continued for 1 hour at room temperature and 24 hours at 100°C. After cooling to room temperature, the solid product was isolated by centrifugation at 4000 rpm for 30 minutes. Next to that, the product was washed with (by stirring for 15 minutes) 75 ml of toluene (3 times), 75 ml of 96% ethanol (2 times) and 75 ml of water (2 times), each time followed by isolation of the product by centrifugation at 4000 rpm for 15 minutes. Finally, the product was isolated by freeze-drying with 100 g of water. Yield: 3.75 g of a white solid, which was characterized by XRD and TGA/DTA. XRD: broad first reflection at 4.71 °2θ with d-spacing 18.75Å. TGA/DTA: residue at 800°C was 68.93%.

### Example 4: An organically modified montmorillonite reaction 3-(glycidoxypropyl)dimethylethoxysilane (EtOSi(Me)₂(CH)₂OCH₂CH(cy-O)CH₂)

### Metal hydroxides of the clay edges were reacted with an epoxy-silane using the following procedure:

This product was prepared as described above in Example 3, now, however, with 5 g of montmorillonite clay modified with dimethyldioctadecylammonium and 4.37 g (20 mmol) of EtOSi(Me)₂(CH₂)₃OCH₂CH(cy-O)CH₂. Yield: 4.5 g of a off-white solid.

### Example 5: An organically modified synthetic hectorite reaction with EtOSi(Me)₂(CH)₂OCH₂CH(cy-O)CH₂

### Metal hydroxides of the clay edges were reacted with an epoxy-silane using the following procedure:

5 g of organically modified hectorite with cetyltributylphosphonium (CeBu₃P) were dispersed in 75 ml of toluene under nitrogen atmosphere. Then 6.55 g (30 mmol) of EtOSi(Me)₂(CH₂)₃OCH₂CH(cy-O)CH₂ and 1 ml of Et₃N were added while stirring. Stirring was continued for 1 hour at room temperature and 24 hours at 100°C. After cooling to room temperature, the solid product was isolated by centrifugation at 4000 rpm for 30 minutes. Next to that, the product was washed with (by stirring for 15 minutes) 75 ml of toluene (3 times), 75 ml of 96% ethanol (2 times) and 75 ml of water (2 times), each time followed by isolation of the product by centrifugation at 4000 rpm for 15 minutes. Finally, the product was isolated by freeze-drying with 100 g of water. Yield: 3.75 g of a white solid, which was characterized by XRD and TGA/DTA. XRD: broad first reflection at 4.71 °2θ with d-spacing 18.75Å. TGrA/DTA: residue at 800°C was 68.93%.

### Example 6: An organically modified synthetic hectorite reaction with EtOSi(Me)₂(CH₂)₃NH₂

### Metal hydroxides of the clay edges were reacted with an epoxy-silane using the following procedure:

This product was prepared as described above in Example 5, now, however, with 4.84 g (30 mmol) of EtOSi(Me)₂(CH₂)₃NH₂. Yield: 2.2 g of a white solid. XRD: broad first reflection at 4.77 °2θ with d-spacing 18.53Å. TGA/DTA: residue at 800°C is 71.59%.

### Example 7: An organically modified synthetic hectorite reaction with dimethyldioctadecylammonium EtOSi(Me)₂(CH₂)₃NH₂

### Metal hydroxides of the clay edges were reacted with an epoxy-silane using the following procedure:

This product was prepared as described above in Example 5, now, however, with 1.95 g of a modified hectorite clay with dimethyldioctadecylammonium and 1.94 g (12 mmol) of EtOSi(Me)₂(CH2)₃NH₂. Yield: 1.21 g of a white solid.

### Example 8: A sodium montmorillonite clay edged with Si(CH₂)₃OCH₂CH(cy-O)CH₂ was reacted with a sodium montmorillonite clay edged with Si(CH₂)₃NH₂ in THF

### These samples were reacted together to obtain self organized particles in the following way:

0.5 g of clay edged with Si(CH₂)₃OCH₂CH(cy-O)CH₂ and 0.5 g of clay edged with Si(CH₂)₃NH₂ were combined and 10 ml of THF are then added. The suspension was stirred at room temperature for 1 hour, followed by stirring at reflux temperature for 1.5 hours. After cooling to room temperature, the mixture was evaporated to dryness. The residue wa dried in vacuo (1 mm Hg) at room temperature for 24 hours. Yield: 1 g of an off-white solid.

### Example 9: A sodium montmorillonite clay edged with Si(CH2)₃OCH₂CH(cy-O)CH₂ was reacted with a sodium montmorillonite clay edged with Si(CH₂)₃NH₂ in diglyme

### These samples were reacted together to obtain self organized particles in the following way:

This reaction is performed as described above in Example 8, now, however, in 10 ml of diglyme. After stirring at room temperature for 1 hour, stirring was now continued for 1.5 hours at 90°C. After cooling down to room temperature, the solid(s) were isolated by filtration and washed with 20 ml of THF (4 times). Finally, the product was dried in vacuo (1 mm Hg) at room temperature for 24 hours. Yield: 0.96 g of an off-white solid.

### Example 10: A sodium montmorillonite clay edged with Si(CH₂)₃OCH₂CH(cy-O)CH₂ was reacted with a sodium montmorillonite clay edged with Si(CH₂)₃NH₂ in water

### These samples were reacted together to obtain self organized particles in the following way:

0.5 g of clay edged with Si(CH₂)₃OCH₂CH(cy-O)CH₂ was stirred in 75 ml of water for 1 hour. Likewise, 0.5 g of clay edged with Si(CH₂)₃NH₂ was stirred in 75 ml of water for 1 hour. Both suspensions were then combined, with the aid of an additionally 50 ml of water. The resulting mixture was placed under an atmosphere of nitrogen and stirred at room temperature for 1 hour, followed by stirring at 75°C for 2 hours. After cooling to room temperature, the solid(s) were isolated by centrifugation (0.5 hour at 4000 rpm). Finally, the residue was dried in a circulation-oven at 70°C for 16 hours. Yield: 1.0 g of a very compact, rigid solid.

## Claims

1. A method for preparing an inorganic crystalline ceramic material having an organized structure, comprising the steps of:
(a) providing nanoparticles of one or more inorganic crystalline ceramic materials;
(b) reacting metal hydroxide groups that are present on the nanoparticles with molecules of a chemical compound which molecules each comprise a first and a second reactive moiety, whereby a covalent bond is formed between the first reactive moieties of the molecules and the respective metal hydroxide groups; and
(c) subjecting the nanoparticles obtained in step (b) to a treatment which enables the formation of a bond between at least two nanoparticles, whereby the bond is formed directly or indirectly between the second reactive moieties of the covalenty bonded molecules of the chemical compound as obtained in step (b), thereby forming an organized structure.

2. The method according to claim 1, wherein the first reactive moieties and the second reactive moieties of the molecules of the chemical compound are selected from the group consisting of halogens (Cl, Br, I) alcohols or alkoxides (OR) (R= H, Na, K, Li) esters or activated esters (O-C=OR), cyanates, isocyanates, isothiocyanates (NCO), acid chlorides (C(=O)Cl), epoxies, amines (NRR'), carboxylic acids and carboxylates (COOX (X=Na, H,Li, K)), aldehydes, ketones (C(=O)C), thiols (SH), sulfides (SS) and polysulfides (SSSS).

3. The method according to claim 1 or 2, wherein the first reactive moieties of the molecules of the chemical compound and the second reactive moieties of the molecules of the chemical compound differ from each other.

4. The method according to claim 2 or 3, wherein the first reactive moieties of the chemical compound comprise an epoxy or an isocyanate.

5. The method according to claim 2 or 3, wherein the second reactive moieties of the molecules of the chemical compound comprise an amine or an alcohol.

6. The method according to claim 1, comprising the steps of:
(a) providing nanoparticles of at least a first and a second inorganic crystalline ceramic material;
(b)(i) reacting metal hydroxide groups that are present on the nanoparticles of the first inorganic crystalline ceramic material with molecules of a first chemical compound which molecules each comprisea first and a second reactive moiety, whereby a covalent bond is formed between the first reactive moieties of the molecules of the first chemical compound and the respective metal hydroxide groups that are present on the nanoparticles of the first inorganic crystalline ceramic material;
(b)(ii) reacting metal hydroxide groups that are present on the nanoparticles of the second inorganic crystalline ceramic material with molecules of a second chemical compound which molecules each comprisea first and a second reactive moiety, whereby a covalent bond is formed between the first reactive moieties of the molecules of the second chemical compound and the respective metal hydroxide groups that are present on the nanoparticles of the second inorganic crystalline ceramic material; and
(c) contacting the nanoparticles of the first and the second inorganic crystalline ceramic material as obtained in respectively step (b)(i) and (b)(ii) to form a bond between nanoparticles of respectively the first and the second inorganic crystalline ceramic material, whereby the bond is directly or indirectly formed between the second reactive moieties of the molecules of the first chemical compound and the second reactive moieties of the molecules of the second chemical compound , thereby forming an organized structure.

7. The method according to claim 1, wherein the first and second reactive moieties of the molecules of the first and the second chemical compound are selected from the group consisting of halogens (Cl, Br, I) alcohols or alkoxides (OR) (R= H, Na, K, Li) esters or activated esters (O-C=OR), cyanates, isocyanates (NCO), isothiocyanates (NCS), acid chlorides (C(=O)Cl), epoxies, amines (NRR'), carboxylic acids and carboxylates (COOX (X=Na, H,Li, K)), aldehydes, ketones (C(=O)C), thiols (SH), sulfides (SS) and polysulfides (SSSS).

8. The method according to claim 7, wherein the first reactive moieties and the second reactive moieties of the molecules of the first chemical compound differ from each other.

9. The method according to claim 7 or 8, wherein the first reactive moieties and the second reactive moieties of the molecules of the second chemical compound differ from each other.

10. The method according to claim 8 or 9, wherein the first reactive moieties of the molecules of the first chemical compound and the first reactive moieties of the molecules of the second chemical compound comprise an epoxy or an isocyanate.

11. The method according to any one of claims 8-10, wherein the second reactive moieties of the molecules of the first chemical compound and the second reactive moieties of the second chemical compound comprise an amine or an alcohol.

12. The method according to any one of claims 1-11, wherein the nanoparticles of the one or more inorganic crystalline ceramic materials have an aspect ratio in the range of from 4 to 1000.

13. The method according to claim 12, wherein the nanoparticles of the one or more inorganic crystalline ceramic materials have an aspect ratio in the range of from 50 to 1000.

14. The method according to claim 12 or 13, wherein the one or more inorganic crystalline ceramic materials comprise a clay having a layered structure and an exchange capacity of from 5 to 250 milliequivalents per 100 gram.

15. The method according to claim 14, wherein the clay is selected from the group consisting of a sepiolite, attapulgite, palygorskite, montmorillonite, saponite, hectoraite, fluorohectorite, beidellite, nontronite, vermiculite, halloysite and stevensite.

16. The method according to claim 15, wherein the clay comprises montmorillonite or hectorite.

17. The method according to any one of claims 1-16, wherein the metal hydroxide groups comprise SiOH and/or AlOH groups.

18. The method according to any one of claims 1-17, wherein the bond between the second reactive moieties of the molecules of the first and second chemical compound that are covalently bonded to metal hydroxide groups present on respective nanoparticles is formed indirectly by means of molecules of a third chemical compound which molecules each comprise a first and a second reactive moiety, whereby the first and second reactive moieties of the molecules of the third chemical compound form direct bonds with the second reactive moieties of the molecules of the first and second chemical compound that are covalenty bonded to metal hydroxide groups that are present on the respective nanoparticles.

19. The method according to claim18, wherein the first and second reactive moieties of the third chemical compound are of the same type.

20. A nanocomposite material comprising one or more inorganic crystalline ceramic materials having an organized structure as prepared as described in any one of claims 1-19, a polymeric matrix and a block copolymer or a graft copolymer

21. A shaped article which comprises an inorganic crystalline ceramic material having an organized structure prepared in accordance with any one of claims 1-19 or a nanocomposite material according to claim 20.

22. A shaped article according to claim 21 which comprises a coating, which coating comprises an inorganic crystalline ceramic material having an organized structure prepared in accordance with any one of claims 1-19 or the nanocomposite according to claim 20.
